# EUROPÄISCHE PATENTSCHRIFT

(11) **EP 3 676 969 B1**
(45) Veröffentlichungstag und Bekanntmachung des Hinweises auf die Patenterteilung: **28.10.2020**
(21) Anmeldenummer: 19758960.9
(22) Anmeldetag: 23.08.2019
(51) Int. Cl.: H04B 7/06

(54) **BETRIEBSVERFAHREN FÜR EIN ANTENNENARRAY EINES FAHRZEUGS**
METHOD FOR OPERATING AN ANTENNA ARRAY OF A VEHICLE
PROCÉDÉ POUR L'OPÉRATION D'UN RÉSEAU D'ANTENNES D'UN VÉHICULE

(30) Priorität: 26.09.2018 DE 102018216389
(43) Veröffentlichungstag der Anmeldung: 08.07.2020
(73) Patentinhaber: Audi AG, 85045 Ingolstadt (DE)
(72) Erfinder: KUBERTSCHAK, Tim, 85055 Ingolstadt (DE)
(86) Internationale Anmeldenummer: PCT/EP2019/072569
(87) Internationale Veröffentlichungsnummer: WO 2020/064236

(56) Entgegenhaltungen:
- DE-A1-102007 029 952
- US-A1- 2004 063 430
- GARCIA NIL ET AL: "Location-aided mm-wave channel estimation for vehicular communication", 2016 IEEE 17TH INTERNATIONAL WORKSHOP ON SIGNAL PROCESSING ADVANCES IN WIRELESS COMMUNICATIONS (SPAWC), IEEE, 3. Juli 2016 (2016-07-03), Seiten 1-5, XP032940098, DOI: 10.1109/SPAWC.2016.7536855 [gefunden am 2016-08-09]

## Beschreibung

Die Erfindung betrifft ein Verfahren zum Betreiben einer Mehrzahl von Antennen eines Fahrzeugs, bei dem das Fahrzeug während einer Fahrt durch eine Funkzelle einer externen Funkstation über ein von den mehreren Antennen abgestrahltes Funksignal mit der externen Funkstation drahtlos kommuniziert. Ferner betrifft die Erfindung ein Fahrzeug mit einer Mehrzahl von Antennen und einem mit den Antennen operativ verbundenen Steuergerät.

Moderne Fahrzeuge weisen einen hohen drahtlosen Kommunikationsbedarf auf, beispielsweise über ein Mobilfunknetz. Die drahtlose Kommunikation eines Fahrzeugs dient dem Austausch von unterschiedlichen Informationen. So werden von dem Fahrzeug aktuelle Nachrichten und Verkehrsdaten, Musik- und Videodaten sowie Daten zum Fahrzeugmanagement oder zur Kooperation mit anderen Fahrzeugen empfangen oder gesendet. Zum drahtlosen Kommunizieren umfasst das Fahrzeug eine oder mehrere Antennen, mittels derer beim drahtlosen Kommunizieren Funksignale abgestrahlt und empfangen werden.

Eine ideale näherungsweise punktförmige Antenne sendet und empfängt Funksignale isotrop, d. h. bezogen auf einen Raumwinkel gleichmäßig, und weist keine Vorzugsrichtung für das Senden und Empfangen eines Funksignals auf. Eine reale Antenne besitzt dagegen eine durch eine Bauform der Antenne vorbestimmte feste Richtcharakteristik, d. h. die Signalstärke eines abgestrahlten oder empfangenden Funksignals variiert abhängig von einer Abstrahlrichtung des gesendeten Funksignals bzw. von einer Einfallsrichtung des empfangenen Funksignals. Wenn sich die Antenne relativ zu einer externen Funkstation bewegt, kann daher ein drahtloses Kommunizieren über die Antenne mit der externen Funkstation aufgrund der relativen Bewegung durch schwankende Signalstärken der Funksignale beeinträchtigt sein. Beispielsweise sinkt mit der Signalstärke eine maximale Datenrate der Kommunikationsverbindung.

In einem modernen Fahrzeug können mehrere Antennen verbaut sein, welche zueinander beabstandet angeordnet sind und gemeinsam eine Antennenanordnung des Fahrzeugs bilden. Mittels eines in dem Fahrzeug vorgesehenen, geeignet konfigurierten und mit den Antennen operativ verbundenen Steuergeräts können diese funktional zu einer sogenannten Phased-Array-Antenne verbunden sein. Eine solche Antennenanordnung wird auch als ein Antennenarray bezeichnet.

Die mehreren Antennen der Phased-Array-Antenne werden von dem Steuergerät derart gesteuert, dass sie ein Funksignal jeweils mit einem bestimmten relativen Phasenversatz abstrahlen. Dadurch wird erreicht, dass das von den mehreren Antennen abgestrahlte Funksignal eine ausgeprägte Richtcharakteristik aufweist, d. h. die Signalstärke ist in einer Vorzugsrichtung stark, während sie in anderen von der Vorzugsrichtung abweichenden Richtungen schwach ist. Für das Empfangen eines Funksignals mit einer Phased-Array-Antenne gilt umgekehrt dasselbe. Diese Steuerung einer Phased-Array-Antenne wird gewöhnlich als Digital Beam Forming (DBF) bezeichnet.

Mit anderen Worten kann mittels der Phased-Array-Antenne eine Abstrahlleistung in einer Vorzugsrichtung konzentriert werden, wodurch sich eine Reichweite des abgestrahlten Funksignals und/oder die maximale Datenrate der Kommunikationsverbindung erhöht. Jedoch kann eine solche gerichtete Kommunikationsverbindung während einer Fahrt des Fahrzeugs abbrechen, wenn sich das Fahrzeug relativ zu der externen Funkstation quer zu einer zwischen dem Fahrzeug und der externen Funkstation gedachten geraden Verbindungslinie bewegt. Da eine Bewegung des Fahrzeugs während der Fahrt gut modellierbar ist, d. h. sich wenig chaotisch vollzieht, kann einem Abbrechen der Kommunikationsverbindung durch ein vorausschauendes Nachführen der Vorzugsrichtung während der Fahrt des Fahrzeugs entgegengewirkt werden.

So offenbart die US 2017/223749 A1 ein Verfahren zum drahtlosen Kommunizieren eines Fahrzeugs mit einer externen Funkstation während einer Fahrt des Fahrzeugs. Zum Aufbauen einer Kommunikationsverbindung erfasst eine Phased-Array-Antenne des Fahrzeugs oder der externen Funkstation Funksignale aus unterschiedlichen Richtungen und ermittelt ein Steuergerät des Fahrzeugs oder der externen Funkstation eine relative Richtung der externen Funkstation bzw. des Fahrzeugs als diejenige Richtung der unterschiedlichen Richtungen, in der eine Signalstärke eines empfangenen Funksignals maximal ist. Das Steuergerät steuert die Antennenanordnung derart, dass ein Funksignal des Fahrzeugs bzw. der externen Funkstation in die ermittelte relative Richtung abgestrahlt wird. Zum Aufrechterhalten der Kommunikationsverbindung während einer Fahrt des Fahrzeugs werden entweder fortlaufend die relative Richtung ermittelt und das Steuern der Antennenordnung an die ermittelte relative Richtung angepasst und/oder das Steuern der Antennenanordnung an eine erfasste Bewegung des Fahrzeugs angepasst.

Die US 8,032,134 B2 offenbart ein alternatives Verfahren zum drahtlosen Kommunizieren eines Fahrzeugs mit einer stationären externen Funkstation während einer Fahrt des Fahrzeugs. Bei dem Verfahren erhält ein Kommunikationssystem des Fahrzeugs absolute Positionskoordinaten der externen Funkstation von einem Funknetzbetreiber oder von der externen Funkstation selbst und ermittelt fortlaufend mittels GPS (Global Positioning System) seine eigenen absoluten Positionskoordinaten und mittels GOS (Global Orientation System) seine eigene Ausrichtung. Anhand der absoluten Position der externen Funkstation und der eigenen absoluten Position und Ausrichtung berechnet das Kommunikationssystem eine relative Position der Basisstation und stellt abhängig von der berechneten relativen Position eine Richtcharakteristik für von dem Kommunikationssystem zu der externen Funkstation abgestrahlte Funksignale ein.

Zum kontinuierlichen Nachführen der Vorzugsrichtung, d. h. dem Variieren der ausgeprägten Richtcharakteristik, beim Abstrahlen und Empfangen von Funksignalen sind umfangreiche Rechenoperationen erforderlich, welche das Steuergerät des Fahrzeugs stark belasten können. Es wird daher ferner angestrebt, den Rechenaufwand zum kontinuierlichen Nachführen der Vorzugsrichtung zu verringern.

Zu diesem Zweck offenbart die WO 2005/031917 A1 ein Verfahren zum drahtlosen Kommunizieren eines ersten Fahrzeugs mit einem zweiten Fahrzeug während einer Fahrt beider Fahrzeuge. Das erste Fahrzeug berechnet eine relative Position des zweiten Fahrzeugs als einen Vektor in Fahrzeugkoordinaten, wählt abhängig von der berechneten relativen Position ein Antennensystem des Fahrzeugs aus und berechnet abhängig von der Richtcharakteristik des ausgewählten Antennensystems und der berechneten relativen Position des zweiten Fahrzeugs eine erforderliche Signalstärke eines von dem Antennensystem abzustrahlenden Funksignals. Wenn das erste Fahrzeug mit mehreren zweiten Fahrzeugen drahtlos kommuniziert, werden die jeweiligen Vektoren in einer Tabelle verwaltet.

Der bereits derzeit hohe und mit künftigen Generationen von Fahrzeugen wachsende drahtlose Kommunikationsbedarf verbraucht eine große und immer größere Menge von elektrischer Energie und verringert folglich den Wirkungsgrad, d. h. die Reichweite, des Fahrzeugs. Dieser Effekt wird bei Elektrofahrzeugen als besonders störend wahrgenommen.

Die DE 10 2007 029952 A1 offenbart ein Verfahren zum Betreiben einer Mehrzahl von Antennen eines Fahrzeugs, bei dem ein Verstärkungsfaktor der Femtobasisstation abhängig von einer Stabilität der Mehrzahl von Antennen hinsichtlich Eigenschwingungen eingestellt wird. Durch Einstellen des Verstärkungsfaktors wird ein Verhältnis einer Sende- bzw. Empfangsleistung der Außenantenne zu einer Sende- bzw. Empfangsleistung einer Innenantenne der Femtobasisstation bestimmt.

Die US 2004/063430 A1 offenbart ein Verfahren zur Übergabe einer mobilen Einheit von einer ersten Basisstation an eine zweite Basisstation in einem drahtlosen Kommunikationssystem unter Verwendung einer intelligenten Antennentechnologie.

Die IEEE Veröffentlichung von Garcia Nil et al mit dem Titel "Location-Aided mm-Wave Channel Estimation for Vehicular Communication" offenbart Millimeter-Wellen-Kommunikation als Technologie für kabellose Systeme.

Der Erfindung liegt daher die Aufgabe zugrunde, ein verbessertes Verfahren zum Betreiben einer Mehrzahl von Antennen eines Fahrzeugs vorzuschlagen, welches die beschriebenen Nachteile vermeidet und einen geringen Verbrauch von elektrischer Energie hat. Darüber hinaus ist es eine Aufgabe der Erfindung, ein Fahrzeug mit einer Mehrzahl von Antennen und einem mit den Antennen operativ verbundenen Steuergerät zur Verfügung zu stellen.

Ein Gegenstand der vorliegenden Erfindung ist ein Verfahren zum Betreiben einer Mehrzahl von Antennen eines Fahrzeugs, bei dem das Fahrzeug während einer Fahrt durch eine Funkzelle einer externen Funkstation über ein von den mehreren Antennen abgestrahltes Funksignal mit der externen Funkstation drahtlos kommuniziert. Moderne Fahrzeuge weisen einen hohen und künftig zunehmenden Bedarf an drahtloser Kommunikation mit externen Funkstationen auf. Bei der externen Funkstation kann es sich beispielsweise um eine Basisstation eines Mobilfunknetzes handeln, welche in ihrer Umgebung eine Mobilfunkzelle erzeugt.

Bei dem erfindungsgemäßen Verfahren wird eine Signalstärke und eine Richtcharakteristik des abgestrahlten Funksignals abhängig von einer Genauigkeit einer ermittelten relativen Position der externen Funkstation eingestellt. Mit anderen Worten erfolgt die drahtlose Kommunikation mit der externen Funkstation während der Fahrt des Fahrzeugs mit einer variierenden Signalstärke bzw. Richtcharakteristik. Die Signalstärke des abgestrahlten Funksignals wird durch Variieren einer Sendeleistung jeder der mehreren Antennen variiert und wirkt sich entsprechend unmittelbar auf den Energieverbrauch und damit den Wirkungsgrad des Fahrzeugs aus. Durch ein geschicktes, von der Genauigkeit (Konfidenz) der ermittelten relativen Position der externen Funkstation abhängiges Variieren der Sendeleistung bzw. der Richtcharakteristik der mehreren Antennen lässt sich der Wirkungsgrad des Fahrzeugs erhöhen.

In einer bevorzugten Ausführungsform wird die Richtcharakteristik stark ausgeprägt und die Signalstärke gering eingestellt, wenn die Genauigkeit der ermittelten relativen Position hoch ist, und wird die Richtcharakteristik schwach ausgeprägt und die Signalstärke hoch eingestellt, wenn die Genauigkeit der ermittelten relativen Position niedrig ist. Je genauer die relative Position der externen Basisstation bekannt ist, desto ausgeprägter kann die Richtcharakteristik des Funksignals eingestellt werden, ohne dass die drahtlose Kommunikation mit der externen Funkstation abbricht. Anders gesagt wird das Funksignal auf die externe Funkstation möglichst exakt ausgerichtet. Ist umgekehrt die relative Position der externen Basisstation nicht oder nur ungenau bekannt, muss das Funksignal isotrop oder annähernd isotrop abgestrahlt werden, um die drahtlose Kommunikation mit der externen Funkstation zu gewährleisten. Je ausgeprägter die Richtcharakteristik der mehreren Antennen eingestellt ist, desto mehr kann die Signalstärke des Funksignals und damit die Sendeleistung der Antennen verringert werden.

Die für die drahtlose Kommunikation mit der externen Funkstation erforderliche Signalstärke des abgestrahlten gerichteten Funksignals hängt von dem Abstand der externen Funkstation zu dem Fahrzeug ab. Je genauer der Abstand bekannt ist, desto geringer kann die Signalstärke des abgestrahlten Funksignals eingestellt werden, da keine große Sicherheitsreserve für das abgestrahlte Funksignal vorgesehen werden muss, um die drahtlose Kommunikation mit der externen Funkstation zu gewährleisten. Anders gesagt genügt eine kleine Sicherheitsreserve, damit das abgestrahlte Funksignal die externe Funkstation mit hoher Sicherheit erreicht.

Im Ergebnis wird ein Funksignal möglichst geringer Signalstärke in einen möglichst kleinen Raumwinkelbereich abgestrahlt, was mit einer geringen Leistungsaufnahme der mehreren Antennen und einer hohen Effizienz der drahtlosen Kommunikation einhergeht.

In vorteilhaften Ausführungsformen wird eine relative Position der externen Funkstation während der Fahrt fortlaufend ermittelt und wird die Richtcharakteristik und die Signalstärke fortlaufend eingestellt. Während der Fahrt des Fahrzeugs ändert sich die relative Position der externen Funkstation fortlaufend, wenn sich das Fahrzeug relativ zu der externen Funkstation bewegt. Durch ein fortlaufendes Anpassen der Richtcharakteristik und/oder der Signalstärke des abgestrahlten Funksignals wird der Energieverbrauch des Fahrzeugs für die drahtlose Kommunikation weiter verringert, was den Wirkungsgrad des Fahrzeugs weiter erhöht.

In einer anderen Ausführungsform wird zum Ermitteln der relativen Position der externen Funkstation eine relative Position der externen Funkstation mit einer Genauigkeit geschätzt, die relative Position der externen Funkstation durch Messen erfasst und die geschätzte relative Position mittels der erfassten relativen Position aktualisiert und die Genauigkeit der geschätzten relativen Position mittels der erfassten relativen Position erhöht. Durch Schätzen wird zunächst die relative Position der externen Funkstation approximiert. Beispielsweise kann das Schätzen auf einer Position und Ausrichtung des Fahrzeugs und einer Position der externen Funkstation beruhen. Die aktuelle Position und Ausrichtung des Fahrzeugs lässt sich beispielsweise mittels GPS (Global Positioning System), wenn auch recht ungenau, ermitteln. Die absolute Position der externen Funkstation kann einer digitalen Karte entnommen werden oder von der Funkstation selbst übertragen werden. Bei einer bekannten Leistung der externen Funkstation kann deren relative Position auch aus einer Richtcharakteristik sowie einer Signalstärke eines von dem Fahrzeug empfangenen Funksignals der externen Funkstation erfasst werden. Die erfasste relative Position der externen Funkstation wird zum Aktualisieren der geschätzten relativen Position der externen Funkstation oder zum Erhöhen der Genauigkeit der geschätzten relativen Position verwendet.

Besonders bevorzugt liefert eine Sensorik des Fahrzeugs fortlaufend Bewegungsdaten des Fahrzeugs, berechnet ein Steuergerät aus den gelieferten Bewegungsdaten eine Bewegung des Fahrzeugs und aktualisiert das Steuergerät die aktualisierte und die präzisierte geschätzte relative Position entsprechend der berechneten Bewegung des Fahrzeugs fortlaufend. Auf diese Weise wird die relative Position der externen Funkstation während der Fahrt des Fahrzeugs kontinuierlich fortgeschrieben. Dadurch wird die Genauigkeit der relativen Position der externen Funkstation weiter erhöht.

In vielen Ausführungsformen wird ein Ankunftsrichtung-Algorithmus (Direction of Arrival, DoA), ein Ankunftswinkel-Algorithmus (Angle of Arrival, AoA), eine Koordinatentransformation, ein Kalman-Filter, eine nichtlineare Erweiterung eines Kalman-Filters, ein Partikelfilter, ein Bayessches Netz, ein Markov-Netz und/oder ein neuronales Netz verwendet. Der Ankunftsrichtung-Algorithmus und der Ankunftswinkel-Algorithmus werden verwendet, um die relative Position der externen Funkstation ausgehend von erfassten Messwerten zu berechnen. Koordinatentransformationen können je nach Bedarf zwischen beliebigen Koordinatensystemen durchgeführt werden. Geographische Koordinaten, kartesische Koordinaten, Polarkoordinaten, Zylinderkoordinaten und Kugelkoordinaten sind Koordinaten beispielhafter Koordinatensysteme. Der Kalman-Filter bzw. dessen nichtlineare Erweiterung sowie der Partikelfilter dienen jeweils dem Glätten von Messkurven, d. h. dem Herausrechnen von gemessenen Ausreißern. Das Bayessche Netz und das Markov-Netz sind Instrumente zur Bestimmung einer Probabilistik (Genauigkeit, Konfidenz), wozu auch ein neuronales Netz (Künstliche Intelligenz, KI) verwendet werden kann.

In einer vorteilhaften Ausführungsform werden nach einem Abbrechen der Kommunikation des Fahrzeugs mit der externen Funkstation die Schritte des Schätzens, des Erfassens, des Aktualisierens und des Erhöhens wiederholt und/oder wird eine Grenze der Funkzelle ermittelt und werden nach einem Austreten des Fahrzeugs aus der Funkzelle und einem Eintreten des Fahrzeugs in eine benachbarte Funkzelle die Schritte des Schätzens, des Erfassens, des Aktualisierens und des Erhöhens bezogen auf eine externe Funkstation der benachbarten Funkzelle ausgeführt. Das Abbrechen der drahtlosen Kommunikation mit der externen Funkstation der aktuellen Funkzelle ebenso wie ein Wechseln der Funkzelle und damit der maßgeblichen externen Funkstation erfordert ein erneutes Initialisieren des erfindungsgemäßen Verfahrens.

Die Grenze der Funkzelle kann beispielsweise anhand einer Signalstärke eines Funksignals ermittelt werden, welches von der externen Funkstation abgestrahlt wurde. Alternativ oder zusätzlich ist die Grenze auch daran erkennbar, dass zusätzlich Funksignale einer externen Funkstation einer benachbarten Funkzelle empfangen werden.

In weiteren Ausführungsformen wird nach dem Eintreten in die benachbarte Funkzelle zusätzlich die geschätzte relative Position der externen Funkstation der früheren Funkzelle entsprechend der berechneten Bewegung des Fahrzeugs fortlaufend weiter aktualisiert. Dies ist nützlich, wenn die Fahrt des Fahrzeugs entlang einer Funkstellengrenze verläuft und das Fahrzeug mehrfach zwischen zwei benachbarten Funkstellengrenzen angeordnet ist. Durch das Fortschreiben der relativen Positionen beider externer Funkstationen entfällt ein erneutes Initialisieren des Verfahrens, wodurch die Effizienz des Verfahrens und mithin der Wirkungsgrad des Fahrzeugs weiter erhöht wird.

Geschickterweise wird eine Sendeleistung jeder Antenne der Mehrzahl von Antennen abhängig von einer Anordnung der Mehrzahl von Antennen und der einzustellenden Signalstärke und der einzustellenden Richtcharakteristik berechnet und wird jede Antenne entsprechend der berechneten Sendeleistung angesteuert. Die Anordnung der mehreren Antennen bestimmt die je Antenne aufzubringende Sendeleistung, um eine erforderliche Signalstärke und/oder Richtcharakteristik einzustellen. Idealerweise wird die Sendeleistung jeder Antenne von dem Steuergerät berechnet.

Gegenstand der Erfindung ist auch ein Fahrzeug mit einer Mehrzahl von Antennen und einem mit den Antennen operativ verbundenen Steuergerät. Derartige Fahrzeuge sind weit verbreitet, so dass sich die Erfindung vielfach verwenden lässt.

Bei dem erfindungsgemäßen Fahrzeug ist das Steuergerät konfiguriert, die mehreren Antennen in einem erfindungsgemäßen Verfahren zu betreiben. Nach einer entsprechenden Konfiguration ist ein in dem Fahrzeug vorhandenes Steuergerät zum Verringern der Leistungsaufnahme der mehreren Antennen geeignet. Deshalb kann das Verfahren auch nachträglich kostengünstig in dem Fahrzeug implementiert werden.

Ein wesentlicher Vorteil des erfindungsgemäßen Verfahrens besteht darin, dass eine mittlere Sendeleistung der mehreren Antennen gering ist. Entsprechend benötigt das Fahrzeug zum drahtlosen Kommunizieren wenig Energie, was mit einem hohen Wirkungsgrad des Fahrzeugs und einer vergrößerten Reichweite sowie einer niedrigen CO₂-Emission des Fahrzeugs einhergeht. Zudem wirkt das erfindungsgemäße Verfahren einem von Fahrzeugen verursachten zunehmenden Elektrosmog entgegen. Als ein weiterer Vorteil des vorgeschlagenen Verfahrens ist anzusehen, dass ein vorhandenes Steuergerät des Fahrzeugs nachträglich konfiguriert werden kann, das erfindungsgemäße Verfahren auszuführen.

Die Erfindung ist anhand von Ausführungsformen in den Zeichnungen schematisch dargestellt und wird unter Bezugnahme auf die Zeichnungen weiter beschrieben. Es zeigt:
Figur 1 in einer schematischen Darstellung eine Draufsicht einer Ausführungsform des erfindungsgemäßen Fahrzeugs;
Figur 2 in einer schematischen Darstellung ein Flussdiagramm einer Ausführungsform des erfindungsgemäßen Verfahrens;
Figur 3 in einer schematischen Darstellung verschiedene Richtcharakteristiken a) bis d) des in Figur 1 dargestellten Funksignals;
Figur 4 in einem Funktionsgraph eine Kennlinie einer Signalstärke des in Figur 1 dargestellten Funksignals.

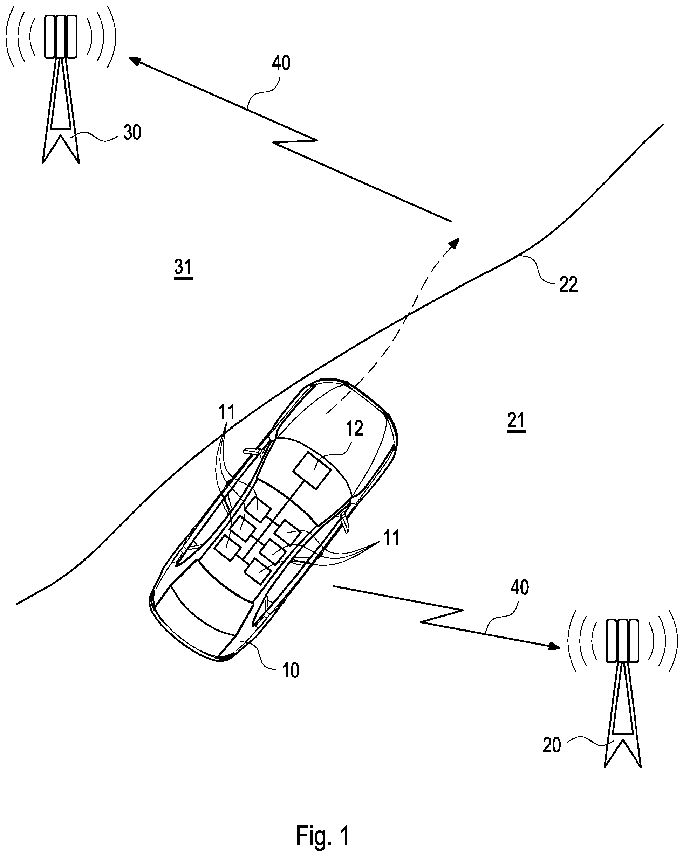

Figur 1 zeigt in einer schematischen Darstellung eine Draufsicht einer Ausführungsform des erfindungsgemäßen Fahrzeugs 10. Das Fahrzeug 10 umfasst eine Mehrzahl von Antennen 11, die zueinander beabstandet angeordnet sind, und ein mit den Antennen 11 operativ verbundenes Steuergerät 12. Das Steuergerät 12 ist konfiguriert, die mehreren Antennen 11 in dem unten beschriebenen Verfahren 100 zu betreiben. Ferner umfasst das Fahrzeug 10 eine nicht dargestellte übliche Sensorik zum Erfassen einer Bewegung des Fahrzeugs 10 während einer Fahrt.

Während des Betriebs des Fahrzeugs 10 fährt das Fahrzeug 10 durch Funkzellen 21, 31 externer Funkstationen 20, 30 und kommuniziert mit der jeweiligen externen Funkstation 20, 30 drahtlos über ein Funksignal 40, welches von den mehreren Antennen 11 abgestrahlt wird. Die Funkzelle 21 weist eine Grenze 22 auf, an der das Fahrzeug 10 die Funkzelle 21 verlässt und in die benachbarte Funkzelle 31 eintritt.

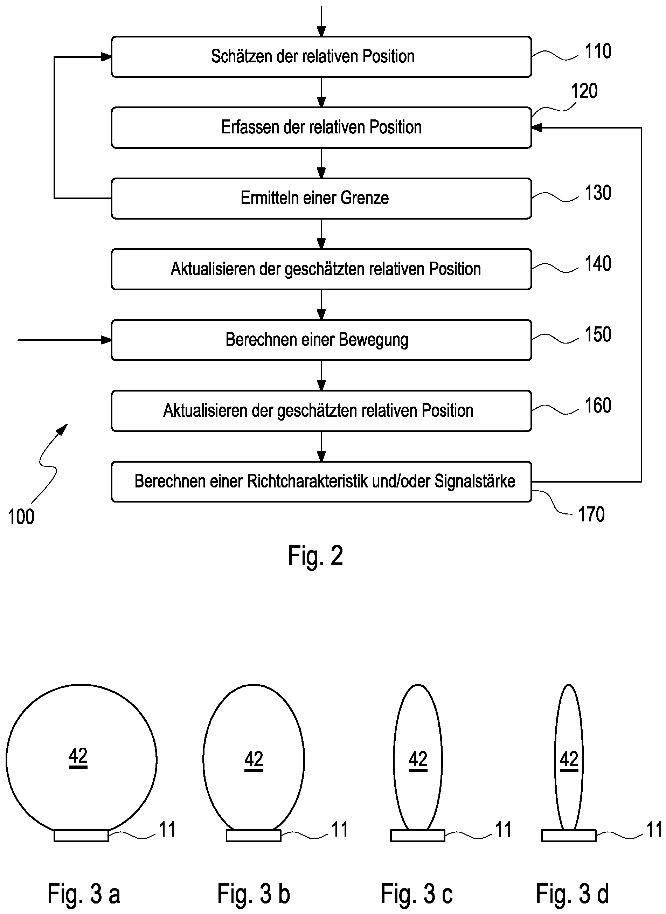

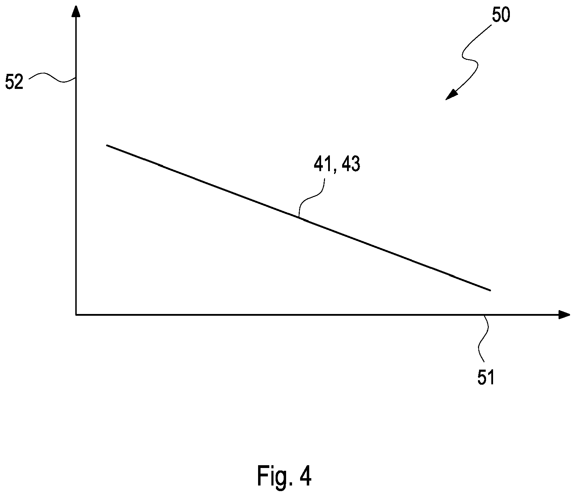

Figur 2 zeigt in einer schematischen Darstellung ein Flussdiagramm einer Ausführungsform des erfindungsgemäßen Verfahrens 100 zum Betreiben der Mehrzahl von Antennen 11 des Fahrzeugs 10. Bei dem Verfahren wird eine Signalstärke 41 (s. Figur 4) und eine Richtcharakteristik 42 (s. Figur 3) des abgestrahlten Funksignals 40 abhängig von einer ermittelten relativen Position und einer Genauigkeit der ermittelten relativen Position der externen Funkstation 20, 30 eingestellt. Dazu werden die relative Position der externen Funkstation 20, 30 während der Fahrt fortlaufend ermittelt und die Richtcharakteristik 42 sowie die Signalstärke 41 jeweils entsprechend der ermittelten relativen Position der externen Funkstation 20, 30 und der Genauigkeit der ermittelten relativen Position eingestellt.

Im Einzelnen wird die Richtcharakteristik 42 stark ausgeprägt und die Signalstärke 41 gering eingestellt, wenn die Genauigkeit der ermittelten relativen Position hoch ist, und wird die Richtcharakteristik 42 schwach ausgeprägt und die Signalstärke 41 hoch eingestellt, wenn die Genauigkeit (Konfidenz) der ermittelten relativen Position niedrig ist.

Zum Ermitteln der relativen Position der externen Funkstation 20, 30 wird in einem Initialisierungsschritt eine relative Position der externen Funkstation 20, 30 mit einer Genauigkeit geschätzt 110. Dann wird die relative Position der externen Funkstation 20, 30 durch Messen erfasst 120 und die geschätzte relative Position mittels der erfassten relativen Position aktualisiert 140. Auf diese Weise wird die Genauigkeit der geschätzten relativen Position mittels der erfassten relativen Position erhöht.

Die Sensorik des Fahrzeugs 10 liefert fortlaufend Bewegungsdaten des Fahrzeugs 10, aus denen das Steuergerät 12 eine Bewegung des Fahrzeugs 10 berechnet 150. Die aktualisierte und/oder durch Erhöhen der Genauigkeit präzisierte geschätzte relative Position wird in einem weiteren Schritt entsprechend der berechneten Bewegung des Fahrzeugs 10 fortlaufend aktualisiert 160.

Bei den vorstehenden Verfahrensschritten werden je nach Bedarf ein Ankunftsrichtung-Algorithmus (Direction of Arrival, DoA), ein Ankunftswinkel-Algorithmus (Angle of Arrival, AoA), eine Koordinatentransformation, ein Kalman-Filter, eine nichtlineare Erweiterung eines Kalman-Filters, ein Partikelfilter, ein Bayessches Netz, ein Markov-Netz oder ein neuronales Netz verwendet. Es versteht sich, dass die genannten Algorithmen, Transformationen, Filter und Netze nicht abschließend aufgezählt sind und innerhalb des Verfahrens mehrfach und in beliebigen Kombinationen verwendet werden können.

Nach einem Abbrechen der Kommunikation des Fahrzeugs 10 mit der externen Funkstation 20, 30, beispielsweise wenn das Fahrzeug 10 in einem Tunnel oder in einem Funkschatten der externen Funkstation 20, 30 angeordnet ist, werden die Schritte des Schätzens 110, des Erfassens 120, des Aktualisierens 140 und des Erhöhens wiederholt.

Ferner wird während der Fahrt die Grenze 22 der Funkzelle 21 ermittelt 130. Auch nach einem Austreten des Fahrzeugs 10 aus der Funkzelle 21 und einem Eintreten des Fahrzeugs 10 in die benachbarte Funkzelle 31, also nach einem Passieren der Grenze 22, werden die Schritte des Schätzens 110, des Erfassens 120, des Aktualisierens 140 und des Erhöhens bezogen auf die externe Funkstation 30 der benachbarten Funkzelle 31 ausgeführt.

Nach dem Eintreten in die benachbarte Funkzelle 31 wird für eine bestimmte Zeit zusätzlich die geschätzte relative Position der externen Funkstation 20 der früheren Funkzelle 21 entsprechend der berechneten Bewegung des Fahrzeugs 10 fortlaufend weiter aktualisiert 160. Dadurch kann bei einem mehrfachen Wechseln des Fahrzeugs 10 zwischen den benachbarten Funkzellen 21, 31 ein mehrfaches Initialisieren des Verfahrens entfallen.

Eine Sendeleistung 43 (s. Figur 4) jeder Antenne 11 der Mehrzahl von Antennen 11 wird abhängig von einer Anordnung der Mehrzahl von Antennen 11 und der einzustellenden Signalstärke 41 und/oder der einzustellenden Richtcharakteristik 42 (s. Figur 3) berechnet 170, und jede Antenne 11 wird entsprechend der berechneten Sendeleistung 43 (s. Figur 4) angesteuert.

Figur 3 zeigt in einer schematischen Darstellung verschiedene Richtcharakteristiken 42 des in Figur 1 dargestellten Funksignals 40. Die Stärke der Ausprägung der Richtcharakteristiken 42 nimmt von a) über b) und c) zu d) zu. Die in Figur 3 a) gezeigte schwach ausgeprägte Richtcharakteristik 42 wird während der Initialisierung des Verfahrens eingestellt. Mit zunehmender Genauigkeit der relativen Position der externen Funkstation 20, 30 werden je nach der erreichten Genauigkeit schrittweise ausgeprägtere Richtcharakteristiken 42 eingestellt, wie sie in den Figuren 3 b), c) und d) abgebildet sind.

Figur 4 zeigt in einem Funktionsgraph 50 eine Kennlinie der Signalstärke 41 des in Figur 1 dargestellten Funksignals 40, welche in etwa zu einer Kennlinie der Sendeleistung 43 korrespondiert. An der Abszisse 51 des Funktionsgraphs 50 ist die Zeit und an der Ordinate 52 des Funktionsgraphs ist die Signalstärke 41 des abgestrahlten Funksignals 40 bzw. die Sendeleistung 43 der mehreren Antennen 11 abgetragen. Die Signalstärke 41 des abgestrahlten Funksignals bzw. die Sendeleistung 43 der mehreren Antennen 11 nehmen ausgehend von der Initialisierung des Verfahrens 100 während der Fahrt des Fahrzeugs 10 in der Funkzelle 21, 31 mit zunehmender Dauer des Verfahrens 100 entsprechend der immer höheren Genauigkeit der geschätzten relativen Position der externen Funkstation 20, 30 ab.

### BEZUGSZEICHENLISTE:

- 10: Fahrzeug
- 11: Antenne
- 12: Steuergerät
- 20: externe Funkstation
- 21: Funkzelle
- 22: Grenze
- 30: externe Funkstation
- 31: Funkzelle
- 40: Funksignal
- 41: Signalstärke
- 42: Richtcharakteristik
- 43: Sendeleistung
- 50: Funktionsgraph
- 51: Abszisse
- 52: Ordinate
- 100: Verfahren
- 110: Schätzen einer relativen Position
- 120: Erfassen der relativen Position
- 130: Ermitteln einer Grenze
- 140: Aktualisieren der geschätzten relativen Position
- 150: Berechnen einer Bewegung
- 160: Aktualisieren der geschätzten relativen Position
- 170: Berechnen einer Richtcharakteristik und/oder Signalstärke

## Patentansprüche

1. Verfahren (100) zum Betreiben einer Mehrzahl von Antennen (11) eines Fahrzeugs (10), bei dem das Fahrzeug (10) während einer Fahrt durch eine Funkzelle (21, 31) einer externen Funkstation (20, 30) über ein von den mehreren Antennen (11) abgestrahltes Funksignal (40) mit der externen Funkstation (20, 30) drahtlos kommuniziert, **dadurch gekennzeichnet, dass** eine Signalstärke (41) und eine Richtcharakteristik (42) des abgestrahlten Funksignals (40) abhängig von einer Genauigkeit einer ermittelten relativen Position der externen Funkstation (20, 30) eingestellt wird.

2. Verfahren nach Anspruch 1, bei dem die Richtcharakteristik (42) stark ausgeprägt und die Signalstärke (41) gering eingestellt wird, wenn die Genauigkeit der ermittelten relativen Position hoch ist, und die Richtcharakteristik (42) schwach ausgeprägt und die Signalstärke (41) hoch eingestellt wird, wenn die Genauigkeit der ermittelten relativen Position niedrig ist.

3. Verfahren nach einem der Ansprüche 1 oder 2, bei dem eine relative Position der externen Funkstation (20, 30) während der Fahrt fortlaufend ermittelt und die Richtcharakteristik (42) und die Signalstärke (41) fortlaufend eingestellt werden.

4. Verfahren nach einem der Ansprüche 1 bis 3, bei dem zum Ermitteln der relativen Position der externen Funkstation (20, 30) eine relative Position der externen Funkstation (20, 30) mit einer Genauigkeit geschätzt (110) wird, die relative Position der externen Funkstation (20, 30) durch Messen erfasst (120) wird und die geschätzte relative Position mittels der erfassten relativen Position aktualisiert (130) und die Genauigkeit der geschätzten relativen Position mittels der erfassten relativen Position erhöht werden.

5. Verfahren nach Anspruch 4, bei dem eine Sensorik des Fahrzeugs (10) fortlaufend Bewegungsdaten des Fahrzeugs (10) liefert, ein Steuergerät (12) aus den gelieferten Bewegungsdaten eine Bewegung des Fahrzeugs (10) berechnet (150) und die aktualisierte und mit einer erhöhten Genauigkeit geschätzte relative Position entsprechend der berechneten Bewegung des Fahrzeugs (10) fortlaufend aktualisiert (160) wird.

6. Verfahren nach einem der Ansprüche 4 oder 5, bei dem ein Ankunftsrichtung-Algorithmus, ein Ankunftswinkel-Algorithmus, eine Koordinatentransformation, ein Kalman-Filter, eine nichtlineare Erweiterung eines Kalman-Filters, ein Partikelfilter, ein Bayessches Netz, ein Markov-Netz und/oder ein neuronales Netz verwendet wird.

7. Verfahren nach einem der Ansprüche 4 bis 6, bei dem nach einem Abbrechen der Kommunikation des Fahrzeugs (10) mit der externen Funkstation (20, 30) die Schritte des Schätzens (110), des Erfassens (120), des Aktualisierens (140) und des Erhöhens wiederholt werden und/oder eine Grenze (22) der Funkzelle (21) ermittelt (130) wird und nach einem Austreten des Fahrzeugs (10) aus der Funkzelle (21) und einem Eintreten des Fahrzeugs (10) in eine benachbarte Funkzelle (31) die Schritte des Schätzens (110), des Erfassens (120), des Aktualisierens (140) und des Erhöhens bezogen auf eine externe Funkstation (30) der benachbarten Funkzelle (31) ausgeführt werden.

8. Verfahren nach Anspruch 7, bei dem nach dem Eintreten in die benachbarte Funkzelle (31) zusätzlich die geschätzte relative Position der externen Funkstation (20) der früheren Funkzelle (21) entsprechend der berechneten Bewegung des Fahrzeugs (10) fortlaufend weiter aktualisiert (160) wird.

9. Verfahren nach einem der Ansprüche 1 bis 8, bei dem eine Sendeleistung (43) jeder Antenne (11) der Mehrzahl von Antennen (11) abhängig von einer Anordnung der Mehrzahl von Antennen (11) und der einzustellenden Signalstärke (41) und der einzustellenden Richtcharakteristik (42) berechnet (170) wird und jede Antenne (11) entsprechend der berechneten Sendeleistung (43) angesteuert wird.

10. Fahrzeug (10) mit einer Mehrzahl von Antennen (11) und einem mit den Antennen (11) operativ verbundenen Steuergerät (12), welches konfiguriert ist, die mehreren Antennen (11) in einem Verfahren (100) nach einem der Ansprüche 1 bis 9 zu betreiben.

## Claims

1. Method (100) for operating a plurality of antennas (11) of a vehicle (10), in which the vehicle (10) communicates wirelessly with an external radio station (20, 30) while travelling through a radio cell (21, 31) of the external radio station (20, 30) by means of a radio signal (40) emitted by the multiple antennas (11), **characterised in that** a signal strength (41) and a directional characteristic (42) of the emitted radio signal (40) is adjusted depending on the accuracy of a determined relative position of the external radio station (20, 30).

2. Method according to claim 1, in which the directional characteristic (42) is very pronounced and the signal strength (41) is adjusted low, when the accuracy of the determined relative position is high, and the directional characteristic (42) is weakly pronounced and the signal strength (41) is adjusted high, when the accuracy of the determined relative position is low.

3. Method according to any of claims 1 or 2, in which a relative position of the external radio station (20, 30) is continuously determined while travelling and the directional characteristic (42) and the signal strength (41) are continuously adjusted.

4. Method according to any of claims 1 to 3, in which, in order to determine the relative position of the external radio station (20, 30), a relative position of the external radio station (20, 30) is estimated (110) with a degree of accuracy, the relative position of the external radio station (20, 30) is recorded by measuring (120) and the estimated relative position is updated (130) by means of the recorded relative position and the accuracy of the estimated relative position is increased by means of the recorded relative position.

5. Method according to claim 4, in which a sensor system of the vehicle (10) continuously provides movement data for the vehicle (10), a control device (12) calculates (150) a movement of the vehicle (10) from the movement data provided and the updated relative position, which is estimated with a high degree of accuracy, is continuously updated (160) in accordance with the calculated movement of the vehicle (10).

6. Method according to any of claims 4 or 5, in which an arrival direction algorithm, an arrival angle algorithm, a coordinate transformation, a Kalman filter, a non-linear extension of a Kalman filter, a particulate filter, a Bayesian network, a Markov network and/or a neural network are used.

7. Method according to any of claims 4 to 6, in which following an interruption in communication between the vehicle (10) and the external radio station (20, 30), the steps of estimating (110), recording (120), updating (140) and increasing are repeated and/or a boundary (22) of the radio cell (21) is determined (130) and after the vehicle (10) leaves the radio cell (21) and the vehicle (10) enters an adjacent radio cell (31), the steps of estimating (110), recording (120), updating (140) and increasing relative to an external radio station (30) in the adjacent radio cell (31) are performed.

8. Method according to claim 7, in which after entering the adjacent radio cell (31), in addition to the estimated relative position of the external radio station (20), the previous radio cell (21) is continuously updated (160) in accordance with the calculated movement of the vehicle (10).

9. Method according to any of claims 1 to 8, in which a transmitting power (43) of each antenna (11) of the plurality of antennas (11) is calculated (170) depending on an arrangement of the plurality of antennas (11) and the signal strength (41) to be adjusted and the directional characteristic (42) to be adjusted and each antenna (11) is controlled in accordance with the calculated transmitting power (43).

10. Vehicle (10) with a plurality of antennas (11) and a control device (12) operatively connected to the antennas (11), which is configured to operate the plurality of antennas (11) using a method (100) according to any of claims 1 to 9.

## Revendications

1. Procédé (100) pour l'exploitation d'une pluralité d'antennes (11) d'un véhicule (10), dans lequel le véhicule (10) communique sans fil avec la station radio externe (20, 30) pendant un trajet à travers une cellule radio (21, 31) d'une station radio externe (20, 30) via un signal radio (40) émis par les antennes multiples (11), **caractérisé en ce qu'**une intensité de signal (41) et une caractéristique directionnelle (42) du signal radio (40) émis est réglée en fonction d'une précision d'une position relative déterminée de la station radio externe (20, 30).

2. Procédé selon la revendication 1, dans lequel la caractéristique directionnelle (42) est fortement prononcée et l'intensité de signal (41) est faiblement réglée lorsque la précision de la position relative déterminée est élevée, et la caractéristique directionnelle (42) est peu prononcée et l'intensité de signal (41) est réglée à un niveau élevé lorsque la précision de la position relative déterminée est faible.

3. Procédé selon l'une quelconque des revendications 1 ou 2, dans lequel une position relative de la station radio externe (20, 30) est déterminée en continu pendant le trajet et la caractéristique directionnelle (42) et l'intensité de signal (41) sont réglées en continu.

4. Procédé selon l'une quelconque des revendications 1 à 3, dans lequel, pour déterminer la position relative de la station radio externe (20, 30), une position relative de la station radio externe (20, 30) est estimée (110) avec une précision, la position relative de la station radio externe (20, 30) est détectée (120) par mesure, et la position relative estimée est mise à jour (130) au moyen de la position relative détectée, et la précision de la position relative estimée est augmentée au moyen de la position relative détectée.

5. Procédé selon la revendication 4, dans lequel un capteur du véhicule (10) fournit en continu des données de mouvement du véhicule (10), un dispositif de commande (12) calcule (150), à partir des données de mouvement fournies, un mouvement du véhicule (10) et la position relative mise à jour et estimée avec une précision accrue est continuellement mise à jour (160) d'une manière correspondant au mouvement calculé du véhicule (10).

6. Procédé selon l'une quelconque des revendications 4 ou 5, dans lequel un algorithme de direction d'arrivée, un algorithme d'angle d'arrivée, une transformation de coordonnées, un filtre de Kalman, une extension non linéaire d'un filtre de Kalman, un filtre à particules, un réseau bayésien, un réseau de Markov et/ou un réseau neuronal est utilisé.

7. Procédé selon l'une quelconque des revendications 4 à 6, dans lequel, après une interruption de la communication du véhicule (10) avec la station radio externe (20, 30), les étapes d'estimation (110), de détection (120), de mise à jour (140) et d'augmentation sont répétées et/ou une limite (22) de la cellule radio (21) est déterminée (130), et après une sortie du véhicule (10) hors la cellule radio (21) et une entrée du véhicule (10) dans une cellule radio adjacente (31), les étapes d'estimation (110), de détection (120), de mise à jour (140) et d'augmentation sont effectuées par rapport à une station radio externe (30) de la cellule radio adjacente (31).

8. Procédé selon la revendication 7, dans lequel, en plus, après l'entrée dans la cellule radio adjacente (31), la position relative estimée de la station radio externe (20) de l'ancienne cellule radio (21) est en outre mise à jour (160) en continu d'une manière correspondant au mouvement calculé du véhicule (10).

9. Procédé selon l'une quelconque des revendications 1 à 8, dans lequel une puissance de transmission (43) de chaque antenne (11) de la pluralité d'antennes (11) est calculée (170) en fonction d'un agencement de la pluralité d'antennes (11) et de l'intensité de signal (41) à régler et de la caractéristique directionnelle (42) à régler et chaque antenne (11) est commandée d'une manière correspondant à la puissance de transmission (43) calculée.

10. Véhicule (10) équipé d'une pluralité d'antennes (11) et d'un dispositif de commande (12) relié de manière opérationnelle aux antennes (11), lequel est configuré pour exploiter les antennes multiples (11) dans un procédé (100) selon l'une quelconque des revendications 1 à 9.
